# FASCICULE DE BREVET EUROPEEN

(11) **EP 1 395 758 B1**
(45) Date de publication et mention de la délivrance du brevet: **08.03.2006**
(21) Numéro de dépôt: 02762490.7
(22) Date de dépôt: 13.06.2002
(51) Int. Cl.: F16C 32/04, F16C 17/20, F16C 27/04

(54) **PALIER DE SECOURS INSENSIBLE A LA CHARGE AXIALE**
AXIALLASTUNEMPFINDLICHES NOTLAGER
AXIAL LOAD-INSENSITIVE EMERGENCY BEARING

(30) Priorité: 15.06.2001 FR 0107915
(43) Date de publication de la demande: 10.03.2004
(73) Titulaire: SOCIETE DE MECANIQUE MAGNETIQUE, F-27950 Saint-Marcel (FR)
(72) Inventeur: BAUDELOCQUE, Luc, F-27200 Vernon (FR); LAPIERRE, Armand, F-27120 Fontaine/Jouy (FR)
(74) Mandataire: Thévenet, Jean-Bruno
(86) Numéro de dépôt international: PCT/FR2002/002024
(87) Numéro de publication internationale: WO 2002/103215

(56) Documents cités:
- EP-A- 0 499 310
- DE-A- 19 825 370
- FR-A- 2 614 375
- GB-A- 2 033 977
- US-A- 3 844 630
- US-A- 4 334 718
- US-A- 4 629 261
- US-A- 4 657 410
- US-A- 5 714 818
- US-A- 5 977 677
- PATENT ABSTRACTS OF JAPAN vol. 018, no. 076 (M-1556), 8 février 1994 (1994-02-08) & JP 05 288218 A (KOBE STEEL LTD), 2 novembre 1993 (1993-11-02)

## Description

La présente invention a pour objet un palier de secours insensible à la charge axiale pour une machine tournante à paliers magnétiques présentant un entrefer radial moyen ε_{*r*} par rapport à un rotor, le palier de secours comprenant au moins un organe de roulement tel qu'un jeu radial dont l'épaisseur ε_{*r*}/2 est de l'ordre de la moitié de l'entrefer radial moyen ε_{*r*} des paliers magnétiques est ménagé entre l'organe de roulement et le rotor, et des jeux axiaux *ε*_{*a*} sont ménagés de part et d'autre de l'organe de roulement entre celui-ci et des premier et deuxième éléments de butée axiale.

Tout équipement de machines tournantes à paliers magnétiques actifs requiert, en cas de surcharge des dits paliers ou en cas de défaillance du dispositif du contrôle électrique ou électronique ou encore lors d'un arrêt ou d'une surcharge de la suspension, un dispositif de secours appelé couramment palier de secours. Ce dispositif qui agit comme une redondance mécanique doit être défini et dimensionné correctement de manière à garantir la totale intégrité de la machine et la possibilité de récupération immédiate de l'équipement après disparition de la surcharge ou la défaillance de l'asservissement. Ces paliers de secours sont en général des roulements lubrifiés à sec, mais d'autres types de paliers secs peuvent être utilisés. Ils présentent un jeu avec le rotor et ne sont pas en rotation en fonctionnement normal. Ce jeu est généralement égal à la moitié de l'entrefer mais peut être réduit si nécessaire. Ces paliers qui sont décrits par exemple dans le document de brevet français 2 613 791 sont des roulements à billes ou des bagues lisses habituellement montés par rapport au stator, sur amortisseurs et présentant un jeu radial.

Les rotors montés sur paliers magnétiques présentent souvent des vitesses de rotation nominales très élevées. Dans ce cas, lors d'un atterrissage sur les paliers de secours en cas de défaillance de l'asservissement ou de son alimentation, le rotor présente des mouvements de tourbillonnement à sa vitesse de rotation avec un excentrement qui est alors défini par le jeu du palier de secours. Ce mouvement tourbillonnaire est appelé fouet radial ou « whirl ». Dans ce cas, le balourd peut être très important et peut provoquer la destruction des roulements ou une déformation du rotor.

Il est alors particulièrement important que le fonctionnement de l'amortisseur soit garanti, sa fonction étant d'une part d'éviter le départ en fouet radial ou « whirl » du rotor en cas de contact avec le palier de secours ou de limiter la fréquence de ce mouvement de fouet radial à une fréquence suffisamment faible pour ne pas endommager les roulements à billes ou les bagues lisses utilisées. Typiquement cette fréquence est comprise entre le quart et le tiers de la fréquence correspondant à la vitesse de rotation nominale de la machine. Tant que la liberté radiale de mouvement des roulements est assurée, l'écrasement radial de l'ensemble permet la sollicitation du ruban métallique amortisseur ou de tout équivalent viscoélastique et satisfait donc à la condition précédente.

Dans certaines turbomachines, la charge axiale en action peut-être considérable. Tant que le palier magnétique axial fonctionne correctement, rien ne vient perturber le bon fonctionnement du palier de secours pour une défaillance radiale. Par contre, en cas de forte charge axiale, non contrôlée par le palier magnétique, le dispositif de palier de secours doit aussi faire face à cette forte charge axiale.

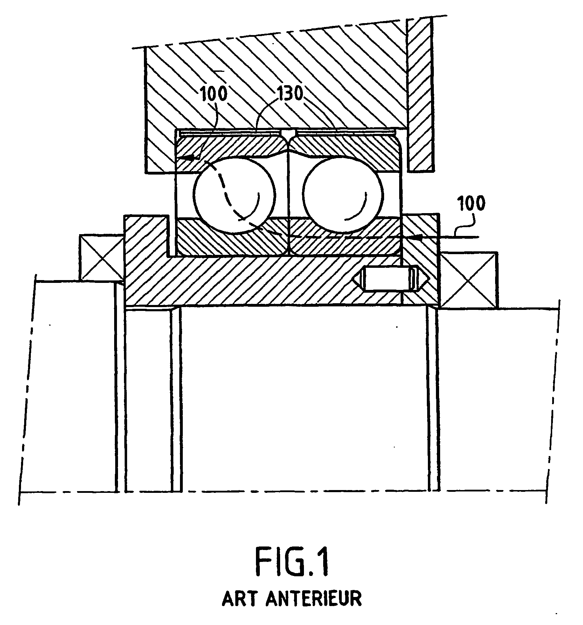

La figure 1, montre l'effet d'une charge axiale 100 transmise du rotor au stator à travers un roulement d'un palier de secours de l'art antérieur. La surface de contact étant assez faible, il est difficile d'y organiser un coefficient de frottement très faible ou d'éviter une pression de Hertz trop élevée. Ces deux restrictions peuvent conduire, en cas de charge axiale élevée, à un blocage radial du palier de secours dans son boîtier et à la non sollicitation du dispositif amortisseur 130. Dans ce cas, le fouet radial ou « whirl » est synchrone à la vitesse de rotation et conduit donc à des charges radiales considérables et quelquefois destructives pour les roulements à billes ou des bagues lisses si elles sont utilisées à la place des roulements à billes, même si l'arrêt de la machine intervient rapidement, en général au bout de quelques secondes grâce au freinage venant du processus de fonctionnement ou de la machine d'entraînement. Cette situation peut devenir préjudiciable à l'équipement et par voie de conséquence à la technologie du palier magnétique.

La présente invention vise à remédier aux inconvénients précités et à réaliser un palier de secours présentant une grande sécurité de fonctionnement et une usure limitée, notamment en cas de défaillance ou d'arrêt de l'alimentation des paliers magnétiques.

Ces buts sont atteints grâce à un palier de secours insensible à la charge axiale pour une machine tournante à paliers magnétiques présentant un entrefer radial moyen ε_{*r*} par rapport à un rotor, le palier de secours comprenant au moins un organe de roulement tel qu'un jeu radial dont la valeur ε_{*r*}/2 est de l'ordre de la moitié de l'entrefer radial moyen ε_{*r*} des paliers magnétiques est ménagé entre l'organe de roulement et le rotor, et des jeux axiaux ε_{*a*} sont ménagés de part et d'autre de l'organe de roulement entre celui-ci et des premier et deuxième éléments de butée axiale ; ledit palier de secours étant caractérisé en ce qu'il comprend en outre un dispositif atterrisseur de secours comprenant un élément intermédiaire ayant une grande surface de contact avec un élément statorique, ledit élément intermédiaire étant interposé entre l'organe de roulement et ledit élément statorique fixé au stator avec un jeu radial par rapport à cet élément statorique, un moyen d'amortissement dans le sens radial interposé entre l'élément intermédiaire et l'élément statorique, et un moyen de contact à très faible frottement réalisé entre l'élément intermédiaire et l'élément statorique pour diminuer les frottements lors de mouvements de rotation entre ces deux éléments.

Selon un aspect de l'invention, le palier de secours comprend en outre des moyens de précharge interposés entre l'élément intermédiaire et l'organe de roulement et agissant axialement sur ce dernier.

De préférence, les moyens de précharge sont des ressorts fixés des deux côtés extrêmes de l'élément intermédiaire exerçant ainsi une précharge bidirectionnelle sur l'organe de roulement.

Selon un mode particulier de réalisation, l'organe de roulement comprend une cage statorique, une cage rotorique et des éléments de roulement disposés entre les cages statorique et rotorique.

Selon un autre mode particulier de réalisation possible, l'organe de roulement comprend une bague lisse.

La valeur *ε*_{*r*}/2 du jeu radial peut être avantageusement comprise entre environ 0,15mm et 0,3mm, mais peut également présenter d'autres valeurs en fonction de l'application et des dimensions du palier.

De la même manière, la valeur *ε*_{*a*} du jeu axial peut être avantageusement comprise entre environ 0,2*mm* et 0,5*mm*, mais peut également présenter d'autres valeurs en fonction de l'application et des dimensions du palier.

Selon un mode particulier de réalisation, l'élément intermédiaire est une pièce femelle annulaire à brides et l'élément statorique est une pièce mâle adaptée à l'élément intermédiaire femelle.

Dans ce cas, l'élément intermédiaire peut être une pièce en deux parties.

Selon un autre mode particulier de réalisation, l'élément statorique est une pièce femelle annulaire à brides et l'élément intermédiaire est une pièce mâle adaptée à l'élément statorique femelle.

Selon une variante de réalisation possible, l'élément statorique est une pièce en deux parties.

Selon un premier aspect de l'invention, le moyen de contact à très faible frottement comprend le dépôt d'une matière à faible coefficient de frottement, sur les faces opposées perpendiculaires à l'axe de rotation, des éléments intermédiaire et statorique.

Dans ce cas, la matière à faible coefficient de frottement, peut comprendre du PTFE ou du MOS₂.

Selon un deuxième aspect particulier de l'invention, le moyen de contact à très faible frottement est réalisé par un traitement de surface des faces opposées perpendiculaires à l'axe de rotation, des éléments intermédiaire et statorique.

Selon un troisième aspect particulier de l'invention, le moyen de contact à très faible frottement est un plateau à billes introduit entre les faces opposées perpendiculaires à l'axe de rotation, des éléments intermédiaire et statorique.

Selon un mode particulier de réalisation le moyen d'amortissement est constitué par un ruban métallique ondulé intercalé entre les faces annulaires opposées parallèles à l'axe de rotation, de la partie interne des éléments intermédiaire et statorique.

Selon un autre mode de réalisation, le moyen d'amortissement est constitué par un anneau visco-élastique intercalé entre les faces annulaires opposées parallèles à l'axe de rotation, de la partie interne des éléments intermédiaire et statorique.

D'autres caractéristiques et avantages de l'invention ressortiront de la description de modes particuliers de réalisation, donnés à titre d'exemples, en référence aux dessins annexés sur lesquels :
- la figure 1 est une vue en demi-coupe axiale, schématisant une charge axiale transmise du rotor au stator à travers un roulement d'un palier de secours de l'art antérieur,
- la figure 2 est une vue en demi-coupe, dans un plan axial, d'un palier de secours selon un premier mode de réalisation de l'invention, et où l'organe de roulement comprend un ensemble d'éléments de roulement maintenus entre deux cages,
- la figure 3 est une vue analogue à celle de la figure 2, mais sans moyen de précharge et avec un organe de roulement comprenant une bague lisse,
- la figure 4 est une vue en demi-coupe, dans un plan axial, d'un palier de secours selon un autre mode de réalisation de l'invention,
- la figure 5 est une vue en demi-coupe, dans un plan axial, d'un palier de secours selon encore un autre mode de réalisation de l'invention,
- la figure 6 est une vue suivant la ligne VI-VI de la figure 2,
- la figure 7 est une vue selon la flèche F de la figure 2 avec arrachement montrant l'élément statorique en deux parties.

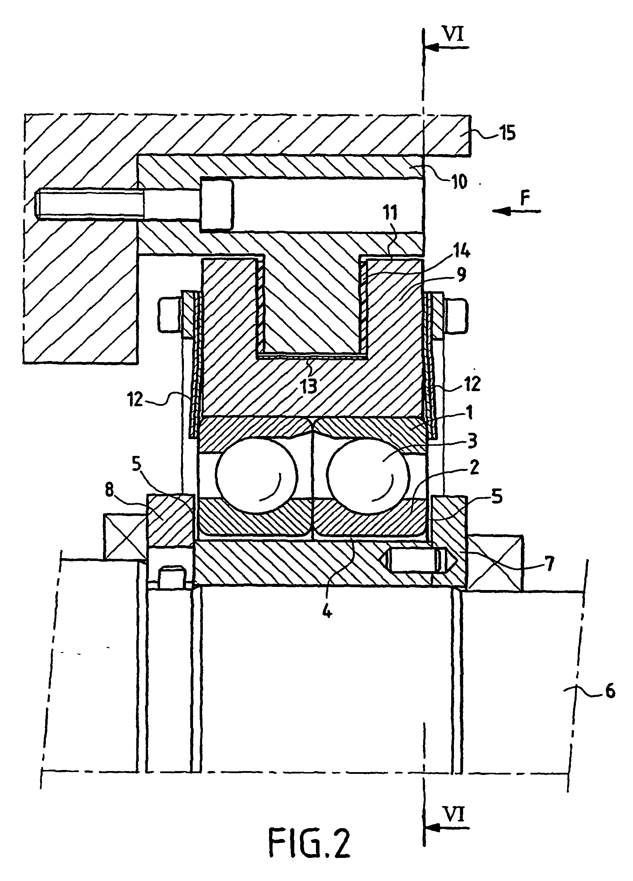

Les figures 2 à 5 correspondent à différentes variantes de réalisation de paliers de secours qui comportent chacune une série d'éléments constitutifs dont la géométrie peut être différente d'une variante de réalisation à l'autre, mais dont la fonction est la même. Les éléments dont la structure reste essentiellement la même portent les mêmes numéros de référence dans les différents modes de réalisation tandis que les éléments de configuration différente présentant essentiellement la même fonction portent des numéros de référence différents mais dont les deux derniers chiffres sont les mêmes.

On voit sur la figure 2 un palier de secours insensible à la charge axiale destiné à être utilisé en combinaison avec un palier magnétique actif non représenté sur le dessin. Le bon fonctionnement du palier est assuré quelle que soit la disposition du rotor 6 par rapport au stator 15, autrement dit le rotor 6 peut être soit à l'intérieur, soit à l'extérieur du stator 15.

Le palier de secours comprend essentiellement au moins un organe de roulement, représenté ici par un double roulement comprenant pour chaque roulement une cage statorique 1, une cage rotorique 2 et dés éléments de roulement 3 disposés entre les cages statorique 1 et rotorique 2.

Sur la figure 2 le palier de secours est représenté dans une position dans laquelle les paliers magnétiques radiaux sont en service normal. Les cages rotoriques 2 de l'organe de roulement sont alors séparées du rotor 6 par un jeu radial 4 dont la valeur *ε*_{*r*}/2 est de l'ordre de la moitié de celle de l'entrefer *ε*_{*r*} des paliers magnétiques. La valeur du jeu radial *ε*_{*r*}/2 peut être avantageusement comprise entre 0,15*mm* et 0,3*mm* mais peut aussi se situer en dehors de ces valeurs suivant l'application. Les cages rotoriques 2 sont également séparées des premier, 7, et deuxième, 8, éléments de butée axiale par des jeux axiaux 5 dont la valeur ε_{*a*} est avantageusement comprise entre environ 0,2mm et 0,5*mm* mais peut aussi se situer en dehors de ces valeurs suivant l'application. Ces jeux axiaux permettent à l'organe de roulement de présenter un mouvement axial dans les deux sens lors d'une charge axiale.

Le palier de secours comprend en outre un dispositif atterrisseur de secours comprenant un élément intermédiaire femelle annulaire à brides 9 ayant une grande surface de contact avec un élément statorique mâle en deux parties 10 adapté à l'élément intermédiaire femelle 9. L'élément intermédiaire 9 est interposé entre la cage statorique 1 et l'élément statorique 10, avec un jeu radial 11, 13 par rapport à cet élément statorique qui est fixé au stator 15. La grande surface de contact entre les éléments intermédiaire 9 et statorique 10 évite une pression trop élevée lorsqu'une grande charge axiale est appliquée sur cette surface. Des ressorts 12 fixés des deux côtés extrêmes de l'élément intermédiaire 9 agissent axialement sur l'organe de roulement en exerçant une précharge bidirectionnelle. Pour favoriser un mouvement de roulement interne, il est en effet important que les roulements ne se trouvent pas déchargés, ce qui sinon pourrait conduire à des glissements internes préjudiciables au bon fonctionnement du système et à sa longévité. Un moyen d'amortissement dans le sens radial est interposé dans le jeu 13 entre les faces annulaires opposées parallèles à l'axe de rotation, de la partie interne des éléments intermédiaire 9 et statorique 10. Ce moyen d'amortissement peut être constitué par un ruban métallique ondulé ou par un anneau visco-élastique. D'autre part, un moyen de contact à très faible frottement 14 est réalisé entre les faces opposées perpendiculaires à l'axe de rotation, des éléments intermédiaire 9 et statorique 10. Ce contact peut être réalisé par un traitement de surface des faces en contact, par un dépôt de type polytétrafluoroéthylène (PTFE) ou MOS₂ ou par un tout autre dépôt de lubrifiant similaire.

Lorsque les paliers magnétiques n'assurent plus leur fonction normale de support, le rotor 6 atterrit sur les cages rotoriques 2 en présentant une vitesse de rotation élevée voisine de la vitesse de rotation nominale. Ensuite, le rotor 6 ralentit progressivement tout en présentant un mouvement de tourbillonnement de type « whirl » à une fréquence limitée avantageusement comprise entre le quart et le tiers de la fréquence correspondant à la vitesse de rotation nominale de la machine, grâce au système amortisseur. En conséquence, la force centrifuge qui s'exerce sur le rotor 6 est ramenée à une fraction nettement inférieure de la valeur que la force centrifuge présenterait en l'absence du moyen d'amortissement.

Le dispositif amortisseur n'est pas placé directement sur les cages extérieures 1 des roulements, mais au niveau d'un diamètre plus important de l'élément intermédiaire 9 en relation directe avec les éléments intermédiaire 9 et statorique 10 à faible frottement.

Grâce à ce dispositif, il est garanti que quelle que soit la charge axiale appliquée au système de palier de secours, la force résultante radiale venant de cette charge axiale via la grande surface de contact à faible coefficient de frottement 14, ne peut en aucun cas s'opposer au libre mouvement radial de ce système. En conséquence ceci permet au système amortisseur 13 de garder son efficacité et d'assurer la fonction décrite plus haut, ce qui est le but recherché du système de paliers de secours. Il est à noter que le bon fonctionnement du système est assuré quel que soit le sens de cette charge axiale, grâce d'une part aux ressorts 12 qui exercent une précharge bidirectionnelle sur l'organe de roulement et d'autre part aux jeux axiaux 5.

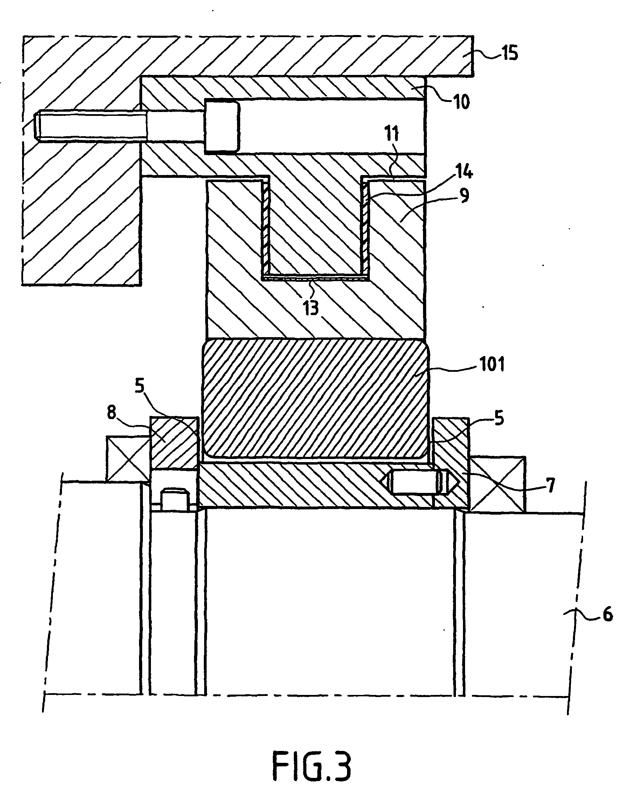

Le palier de secours de la figure 3 ne diffère de celui de la figure 2 que par l'agencement de certains éléments. L'organe de roulement est une bague lisse 101 ne comportant donc pas de roulement interne. Par conséquent, des ressorts fixés des deux côtés extrêmes de l'élément intermédiaire 9 ne sont plus nécessaires.

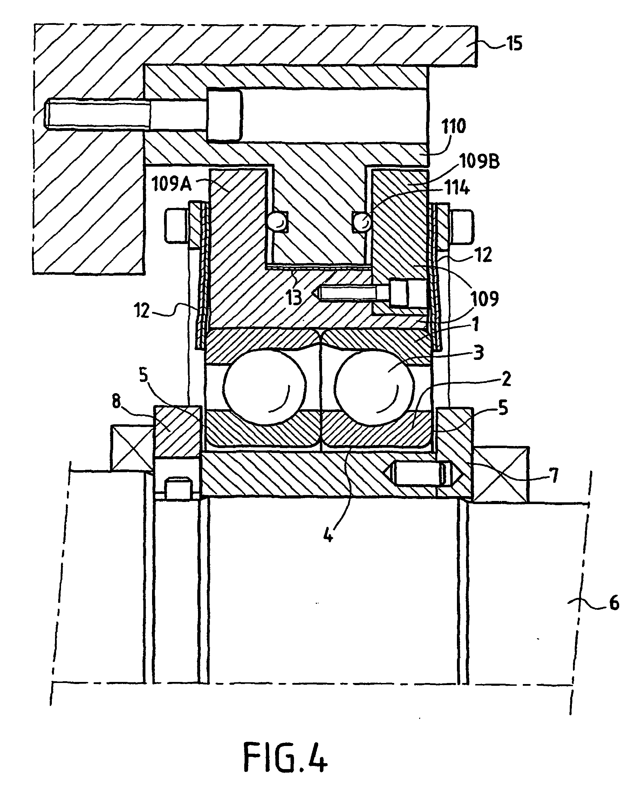

Sur la figure 4, l'élément intermédiaire 109 comprend un élément annulaire femelle à brides en deux parties 109A, 109B. Par contre l'élément statorique 110 est une pièce de révolution pouvant être réalisée en une seule partie. Par ailleurs, le moyen de contact à très faible frottement comprend un plateau à billes 114 introduit entre les faces opposées perpendiculaires à l'axe de rotation, des éléments intermédiaire 109 et statorique 110. Dans ce cas, la charge est répartie sur un grand nombre de billes qui garantissent par ailleurs un très faible coefficient de frottement.

Le plateau à billes 114 constitue ainsi un mode de réalisation alternatif au revêtement de contact 14 à très faible coefficient de frottement.

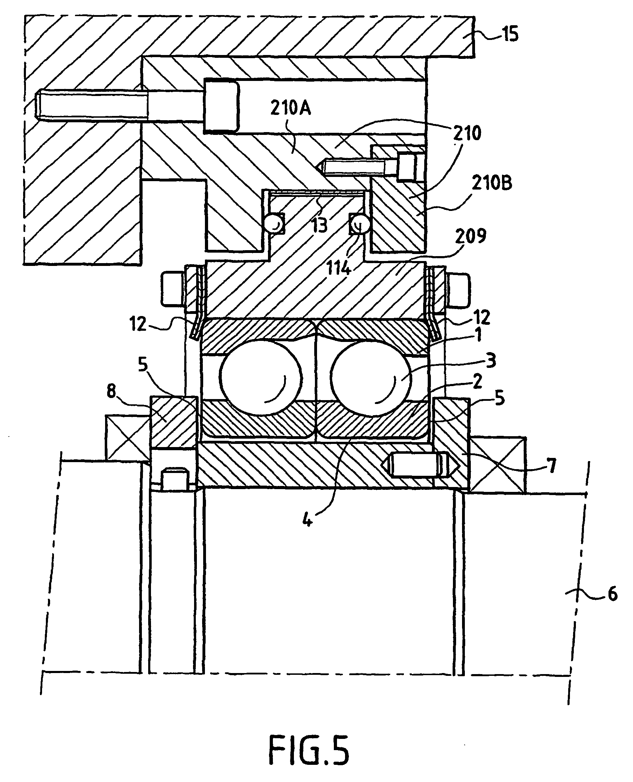

La figure 5 correspond à un autre mode de réalisation de l'invention, dans lequel l'élément statorique 210 est une pièce femelle annulaire à brides en deux parties 210A, 210B et l'élément intermédiaire 209 est une pièce mâle de révolution en une partie adaptée à l'élément statorique femelle 210.

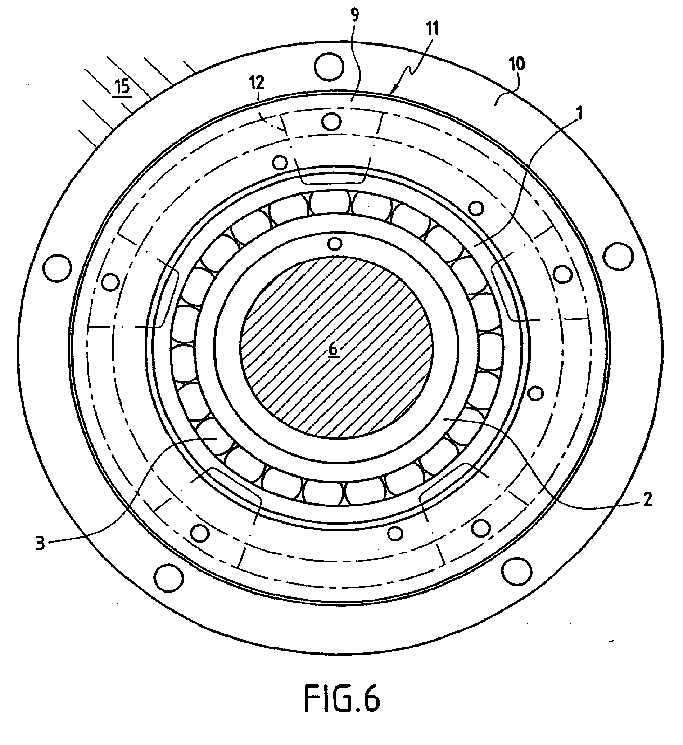

La figure 6 est une vue suivant le plan VI-VI de la figure 2 montrant le cas où le rotor 6 est interne et l'organe de roulement comprenant une cage statorique 1, une cage rotorique 2 et des éléments de roulement 3 disposés entre les cages statorique 1 et rotorique 2, est monté sur le rotor 6. On voit aussi les ressorts 12 fixés sur l'élément intermédiaire 9 exerçant ainsi une précharge sur la cage statorique 1.

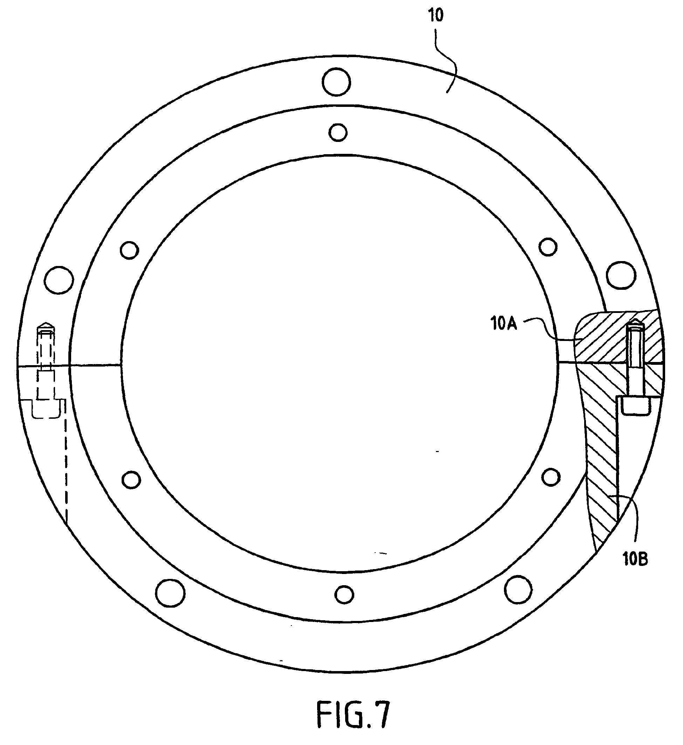

La figure 7 est une vue selon la flèche F de la figure 2 avec arrachement montrant l'élément statorique 10 en deux parties 10A, 10B. Le fait que cet élément statorique 10 soit en deux parties est nécessaire pour l'assemblage du dispositif dès lors que l'élément intermédiaire 9 est lui-même réalisé en une seule partie.

Diverses modifications peuvent être apportées aux différents modes de réalisation qui viennent d'être décrits sans sortir du cadre de l'invention. En particulier, les différents modes de réalisation peuvent se combiner entre eux. Par exemple, le plateau à billes 114 des figures 4 et 5 pourrait être interchangé avec le revêtement de contact 14 des figures 2 et 3. La bague lisse 101 pourrait aussi être intégrée dans le mode de réalisation des figures 4 et 5 à la place de l'organe de roulement 1, 2, 3.

## Revendications

1. Palier de secours insensible à la charge axiale pour une machine tournante à paliers magnétiques présentant un entrefer radial moyen ε_{*r*} par rapport à un rotor (6), le palier de secours comprenant au moins un organe de roulement (1, 2, 3 ; 101) tel qu'un jeu radial (4) dont la valeur *ε*_{*r*}/2 est de l'ordre de la moitié de l'entrefer radial moyen *ε*_{*r*} des paliers magnétiques est ménagé entre l'organe de roulement (1, 2, 3 ; 101) et le rotor (6), et des jeux axiaux ε_{α} (5) sont ménagés de part et d'autre de l'organe de roulement (1, 2, 3; 101) entre celui-ci et des premier et deuxième éléments de butée axiale (7, 8) ;
**caractérisé en ce qu'**il comprend en outre un dispositif atterrisseur de secours comprenant un élément intermédiaire (9 ; 109 ; 209) ayant une grande surface de contact avec un élément statorique (10 ; 110 ; 210), ledit élément intermédiaire (9 ; 109 ; 209) étant interposé entre l'organe de roulement (1, 2, 3 ; 101) et ledit élément statorique (10 ; 110 ; 210) fixé au stator (15) avec un jeu radial (11, 13) par rapport à cet élément statorique (10; 110; 210), un moyen d'amortissement (13) dans le sens radial interposé entre l'élément intermédiaire (9 ; 109 ; 209) et l'élément statorique (10 ; 110 ; 210), un moyen de contact à très faible frottement (14 ; 114) réalisé entre l'élément intermédiaire (9 ; 109 ; 209) et l'élément statorique (10; 110; 210) pour diminuer les frottements lors de mouvements de rotation entre ces deux éléments et des moyens de précharge (12) interposés entre l'élément intermédiaire (9 ; 109 ; 209) et l'organe de roulement (1, 2, 3) et agissant axialement sur ce dernier.

2. Palier de secours insensible à la charge axiale selon la revendication 1, **caractérisé en ce que** les moyens de précharge sont des ressorts (12) fixés des deux côtés extrêmes de l'élément intermédiaire (9 ; 109 ; 209) exerçant ainsi une précharge bidirectionnelle sur l'organe de roulement (1, 2, 3).

3. Palier de secours insensible à la charge axiale selon l'une quelconque des revendications 1 et 2, **caractérisé en ce que** l'organe de roulement (1, 2, 3) comprend une cage statorique (1), une cage rotorique (2) et des éléments de roulement (3) disposés entre les cages statorique (1) et rotorique (2).

4. Palier de secours insensible à la charge axiale selon la revendication 1, **caractérisé en ce que** l'organe de roulement (101) comprend une bague lisse (101).

5. Palier de secours insensible à la charge axiale selon l'une quelconque des revendications 1 à 4, **caractérisé en ce que** la valeur ε_{*r*}/2 du jeu radial (4) est comprise entre environ 0,15mm et 0,3mm.

6. Palier de secours insensible à la charge axiale selon l'une quelconque des revendications 1 à 4, **caractérisé en ce que** la valeur ε_{*a*} du jeu axial (5) est comprise entre environ 0,2mm et 0,5mm.

7. Palier de secours insensible à la charge axiale selon l'une quelconque des revendications 1 à 6, **caractérisé en ce que** l'élément intermédiaire est une pièce femelle annulaire à brides (9 ; 109) et l'élément statorique est une pièce mâle (10 ; 110) adaptée à l'élément intermédiaire femelle (9 ; 109).

8. Palier de secours insensible à la charge axiale selon l'une quelconque des revendications 1 à 6, **caractérisé en ce que** l'élément statorique est une pièce femelle annulaire à brides (210) et l'élément intermédiaire est une pièce mâle (209) adaptée à l'élément statorique femelle (210).

9. Palier de secours insensible à la charge axiale selon la revendication 7, **caractérisé en ce que** l'élément intermédiaire est une pièce en deux parties (109).

10. Palier de secours insensible à la charge axiale selon la revendication 7 ou la revendication 8, **caractérisé en ce que** l'élément statorique est une pièce en deux parties (10 ; 210).

11. Palier de secours insensible à la charge axiale selon l'une quelconque des revendications 1 à 10, **caractérisé en ce que** le moyen de contact à très faible frottement comprend le dépôt d'une matière à faible coefficient de frottement (14), sur les faces opposées perpendiculaires à l'axe de rotation, des éléments intermédiaire (9 ;109 ;209) et statorique (10; 110; 210).

12. Palier de secours insensible à la charge axiale selon la revendication 11, **caractérisé en ce que** la matière à faible coefficient de frottement (14), comprend du PTFE ou du MOS₂.

13. Palier de secours insensible à la charge axiale selon l'une quelconque des revendications 1 à 10, **caractérisé en ce que** le moyen de contact à très faible frottement est réalisé par un traitement de surface des faces opposées perpendiculaires à l'axe de rotation, des éléments intermédiaire (9 ;109 ;209) et statorique (10 ; 110 ; 210).

14. Palier de secours insensible à la charge axiale selon l'une quelconque des revendications 1 à 10, **caractérisé en ce que** le moyen de contact à très faible frottement est un plateau à billes (114) introduit entre les faces opposées perpendiculaires à l'axe de rotation, des éléments intermédiaire (9 ;109 ;209) et statorique (10 ; 110 ; 210).

15. Palier de secours insensible à la charge axiale selon l'une quelconque des revendications 1 à 14, **caractérisé en ce que** le moyen d'amortissement (13) est constitué par un ruban métallique ondulé intercalé entre les faces annulaires opposées parallèles à l'axe de rotation, de la partie interne des éléments intermédiaire (9 ;109 ;209) et statorique (10 ; 110 ; 210).

16. Palier de secours insensible à la charge axiale selon l'une quelconque des revendications 1 à 14, **caractérisé en ce que** le moyen d'amortissement (13) est constitué par un anneau visco-élastique intercalé entre les faces annulaires opposées parallèles à l'axe de rotation, de la partie interne des éléments intermédiaire (9 ;109 ;209) et statorique (10 ; 110 ; 210).

## Patentansprüche

1. Gegen Axialbelastung unempfindliches Notlager für eine drehende Maschine mit Magnetlagern, umfassend einen mittleren radialen Luftspalt εᵣ in Bezug auf einen Rotor (6), wobei das Sicherheitslager mindestens ein Rollelement (1, 2, 3; 101) sowie ein Radialspiel (4) umfaßt, dessen Größe εᵣ/2 ungefähr die Hälfte der des mittleren radialen Luftspalts er der Magnetlager beträgt, und das zwischen dem Rollelement (1, 2, 3; 101) und dem Rotor (6) angeordnet ist, wobei Axialspiele εₐ (5) beiderseits des Rollelements (1, 2, 3; 101) zwischen diesem und ersten und zweiten Axialanschlagelementen (7, 8) angeordnet sind;
**dadurch gekennzeichnet, daß** es ferner eine Notaufsetzvorrichtung aufweist, umfassend
ein Zwischenelement (9; 109; 209) mit einer großen Kontaktfläche mit einem Statorelement (10; 110; 210), wobei das Zwischenelement (9; 109; 209) zwischen dem Rollelement (1, 2, 3; 101) und dem am Stator (15) befestigten Statorelement (10; 110; 210) mit einem Radialspiel (11, 13) in Bezug auf dieses Statorelement (10; 110; 210) angeordnet ist,
ein Dämpfungselement (13) in Radialrichtung, das zwischen dem Zwischenelement (9; 109; 209) und dem Statorelement (10; 110; 210) angeordnet ist,
ein Kontaktmittel mit sehr geringer Reibung (14, 114), das zwischen dem Zwischenelement (9; 109; 209) und dem Statorelement (10; 110; 210) verwirklicht ist, um die Reibungen bei Drehbewegungen zwischen diesen beiden Elementen zu verringern, und
Vorbelastungsmittel (12), die zwischen dem Zwischenelement (9; 109; 209) und dem Rollelement (1, 2, 3) angeordnet sind und auf dieses letztgenannte axial einwirken.

2. Gegen Axialbelastung unempfindliches Notlager nach Anspruch 1, **dadurch gekennzeichnet, daß** die Vorbelastungsmittel Federn (12) sind, die auf den beiden äußersten Seiten des Zwischenelements (9; 109; 209) angeordnet sind und so eine bidirektionale Vorbelastung auf das Rollelement (1, 2, 3) ausüben.

3. Gegen Axialbelastung unempfindliches Notlager nach einem der Ansprüche 1 und 2, **dadurch gekennzeichnet, daß** das Rollelement (1, 2, 3) einen Statorkäfig (1), einen Rotorkäfig (2) und Rolleinheiten (3) umfaßt, die zwischen Statorkäfig (1) und dem Rotorkäfig (2) angeordnet sind.

4. Gegen Axialbelastung unempfindliches Notlager nach Anspruch 1, **dadurch gekennzeichnet, daß** das Rollelement (101) einen glatten Ring (101) umfaßt.

5. Gegen Axialbelastung unempfindliches Notlager nach einem der Ansprüche 1 bis 4, **dadurch gekennzeichnet, daß** die Größe εᵣ/2 des Radialspiels (4) zwischen ungefähr 0,15 mm und 0,3 mm liegt.

6. Gegen Axialbelastung unempfindliches Notlager nach einem der Ansprüche 1 bis 4, **dadurch gekennzeichnet, daß** die Größe εₐ des Axialspiels (5) zwischen ungefähr 0,2 mm und 0,5 mm liegt.

7. Gegen Axialbelastung unempfindliches Notlager nach einem der Ansprüche 1 bis 6, **dadurch gekennzeichnet, daß** das Zwischenelement ein weibliches ringförmiges Stück mit Flanschen (9; 109) ist und das Statorelement ein männliches Stück (10; 110) ist, das an das weibliche Zwischenelement (9; 109) angepaßt ist.

8. Gegen Axialbelastung unempfindliches Notlager nach einem der Ansprüche 1 bis 6, **dadurch gekennzeichnet, daß** das Statorelement ein weibliches ringförmiges Stück mit Flanschen (210) und das Zwischenelement ein männliches Stück (209) ist, das an das weibliche Statorelement (210) angepaßt ist.

9. Gegen Axialbelastung unempfindliches Notlager nach Anspruch 7, **dadurch gekennzeichnet, daß** das Zwischenelement ein zweiteiliges Stück (109) ist.

10. Gegen Axialbelastung unempfindliches Notlager nach Anspruch 7 oder Anspruch 8, **dadurch gekennzeichnet, daß** das Statorelement ein zweiteiliges Stück (10; 210) ist.

11. Gegen Axialbelastung unempfindliches Notlager nach einem der Ansprüche 1 bis 10, **dadurch gekennzeichnet, daß** das Kontaktmittel mit sehr geringer Reibung eine Ablagerung eines Materials mit geringem Reibbeiwert (14) auf den senkrecht zur Drehachse des Zwischenelement (9; 109; 209) und des Statorelements (10; 110; 210) gegenüberliegenden Flächen umfaßt.

12. Gegen Axialbelastung unempfindliches Notlager nach Anspruch 11, **dadurch gekennzeichnet, daß** das Material mit geringem Reibbeiwert (14) PTFE oder MOS₂ umfaßt.

13. Gegen Axialbelastung unempfindliches Notlager nach einem der Ansprüche 1 bis 10, **dadurch gekennzeichnet, daß** das Kontaktmittel mit sehr geringer Reibung durch eine Oberflächenbehandlung der senkrecht zur Drehachse des Zwischenelements (9; 109; 209) und des Statorelements (10; 110; 210) gegenüberliegenden Flächen verwirklicht ist.

14. Gegen Axialbelastung unempfindliches Notlager nach einem der Ansprüche 1 bis 10, **dadurch gekennzeichnet, daß** das Kontaktmittel mit sehr geringer Reibung eine Kugelplatte (114) ist, die zwischen die senkrecht zur Drehachse des Zwischenelements (9, 109; 209) und des Statorelements (10; 110; 210) gegenüberliegenden Flächen eingeführt ist.

15. Gegen Axialbelastung unempfindliches Notlager nach einem der Ansprüche 1 bis 14, **dadurch gekennzeichnet, daß** das Dämpfungsmittel (13) von einem welligen Metallband gebildet ist, das zwischen den parallel zur Drehachse des inneren Teils des Zwischenelements (9; 109; 209) und des Statorelements (10; 110; 210) gegenüberliegenden ringförmigen Flächen angeordnet ist.

16. Gegen Axialbelastung unempfindliches Notlager nach einem der Ansprüche 1 bis 14, **dadurch gekennzeichnet, daß** das Dämpfungselement (13) von einem viskoelastischen Ring gebildet ist, der zwischen den parallel zur Drehachse des inneren Teils des Zwischenelements (9; 109; 209) und des Statorelements (10; 110; 210) gegenüberliegenden ringförmigen Flächen angeordnet ist.

## Claims

1. An emergency bearing that is insensitive to axial load for a rotary machine having magnetic bearings presenting a mean radial airgap εᵣ relative to a rotor (6), the emergency bearing comprising at least one bearing member (1, 2, 3; 101) such that radial clearance (4) is provided between the bearing member (1, 2, 3; 101) and the rotor (6), the value εᵣ/2 of the radial clearance being about half the mean radial airgap εᵣ of the magnetic bearings, and axial clearance εₐ (5) is provided on either side of the bearing member (1, 2, 3; 101) between the bearing member and first and second axial abutment elements (7, 8);
the emergency bearing being **characterised in that** it further comprises an emergency landing device comprising an intermediate element (9; 109; 209) having a large contact area with a stator element (10; 110; 210), said intermediate element (9; 109; 209) being interposed between the bearing member (1, 2, 3; 101) and said stator element (10; 110; 210) fixed to the stator (15) with radial clearance (11, 13) relative to said stator element (10; 110; 210), damper means (13) in the radial direction interposed between the intermediate element (9; 109; 209) and the stator element (10; 110; 210), contact means (14; 114) having a very low coefficient of friction being provided between the intermediate element (9; 109; 209) and the stator element (10; 110; 210) to reduce friction during rotary motion between these two elements and preloading means (12) interposed between the intermediate element (9; 109; 209) and the bearing member (1, 2, 3) and acting axially thereon.

2. An emergency bearing insensitive to axial load according to claim 1, **characterised in that** the preloading means are springs (12) fixed to the two extreme sides of the intermediate element (9; 109; 209), thereby applying preloading in both directions to the bearing member (1, 2, 3).

3. An emergency bearing insensitive to axial load according to claim 1 or claim 2, **characterised in that** the bearing member (1, 2, 3) comprises a stator cage (1), a rotor cage (2), and bearing elements (3) disposed between the stator and rotor cages (1, 2).

4. An emergency bearing insensitive to axial load according to claim 1, **characterised in that** the bearing member (101) comprises a smooth ring (101).

5. An emergency bearing insensitive to axial load according to any one of claims 1 to 4, **characterised in that** the value ε_{r/}2 of the radial clearance (4) lies in the range about 0.15 mm to about 0.3 mm.

6. An emergency bearing insensitive to axial load according to any one of claims 1 to 4, **characterised in that** the value εₐ of the axial clearance (5) lies in the range about 0.2 mm to about 0.5 mm.

7. An emergency bearing insensitive to axial load according to any one of claims 1 to 6, **characterised in that** the intermediate element is a flanged annular female part (9; 109) and the stator element is a male part (10; 110) that matches the female intermediate element (9; 109).

8. An emergency bearing insensitive to axial load according to any one of claims 1 to 6, **characterised in that** the stator element is a flanged annular female part (210) and the intermediate element is a male part (209) that matches the female stator element (210).

9. An emergency bearing insensitive to axial load according to claim 7, **characterised in that** the intermediate element is a part made in two pieces (109).

10. An emergency bearing insensitive to axial load according to claim 7 or claim 8, **characterised in that** the stator element is a part made in two pieces (10; 210).

11. An emergency bearing insensitive to axial load according to any one of claims 1 to 10, **characterised in that** the contact means with very low friction comprises a deposit (14) of low friction material on the facing faces of the intermediate element (9; 109; 209) and the stator element (10; 110; 210) that extend perpendicularly to the axis of rotation.

12. An emergency bearing insensitive to axial load according to claim 11, **characterised in that** the low friction material (14) comprises PTFE or MOS₂.

13. An emergency bearing insensitive to axial load according to any one of claims 1 to 10, **characterised in that** the contact means having very low friction is made by applying surface treatment to the facing faces of the intermediate element (9; 109; 209) and the stator element (10; 110; 210) that extend perpendicularly to the axis of rotation.

14. An emergency bearing insensitive to axial load according to any one of claims 1 to 10, **characterised in that** the contact means having very low friction is an axial ball bearing (114) interposed between the facing faces of the intermediate element (9; 109; 209) and the stator element (10; 110; 210) that extend perpendicularly to the axis of rotation.

15. An emergency bearing insensitive to axial load according to any one of claims 1 to 14, **characterised in that** the damper means (13) is constituted by a corrugated metal strip interposed between the facing annular faces of the inner portions of the intermediate element (9; 109; 209) and of the stator element (10; 110; 210) that extend parallel to the axis of rotation.

16. An emergency bearing insensitive to axial load according to any one of claims 1 to 14, **characterised in that** the damper means (13) are constituted by a viscoelastic ring interposed between the facing annular faces of the inner portions of the intermediate element (9; 109; 209) and of the stator element (10; 110; 210) that extend parallel to the axis of rotation.
